# EUROPEAN PATENT SPECIFICATION

(11) **EP 0 906 356 B1**
(45) Date of publication and mention of the grant of the patent: **10.11.2004**
(21) Application number: 97924169.2
(22) Date of filing: 04.06.1997
(51) Int. Cl.: C08G 63/85, C08J 5/18, B65D 1/00, B65D 1/02

(54) **Process for producing a polyester polymer**
Verfahren zur Herstellung eines Polyesterpolymers
procédé pour la préparation d'un polyester polymère

(30) Priority: 11.06.1996 GB 9612162; 11.06.1996 GB 9612163
(43) Date of publication of application: 07.04.1999
(73) Proprietor: Dupont Teijin Films U.S. Limited Partnership, Wilmington, Delaware 19805 (US)
(72) Inventor: NAYLOR, Christopher, Charles, Tyne & Wear NE11 9TT (GB); BAILLIE, Lynn, Coupar, Eaglescliffe, Stockton-on-Tees TS16 0LE (GB); MORTLOCK, Simon, Vernon, Islesteps, Dumfries DG2 8ES (GB); MacDONALD, William, Alasdair, Guisborough TS14 8JX (GB); DEAN, Jill, Barbara, Middlesbrough, Cleveland TS9 5DL (GB); JONES, Kenneth, Morgan, Knaresborough, North Yorkshire HG5 8EX (GB); RIDLAND, John, County Durham, Durham DH1 5GL (GB); HEPPLEWHITE, Iain, Wesley, Billingam, Teeside TS23 2BL (GB); JOLLY, Brian, Steven, Stokesley, North Yorkshire TS9 5QG (GB)
(74) Representative: Carpmaels & Ransford
(86) International application number: PCT/GB1997/001505
(87) International publication number: WO 1997/047675

(56) References cited:
- EP-A- 0 047 608
- EP-A- 0 472 179
- GB-A- 851 061

## Description

The present invention relates to a process for producing a polyester polymer using a specific titanium or zirconium catalyst.

The use of polyesters, particularly polyethylene terephthalate or copolymers thereof (often referred to collectively as polyethylene terephthalate or PET), for the manufacture of packaging material, such as films, bottles and other containers, is well known. In the case of bottles for containing drinks, such as carbonated soft drinks and mineral water, these are normally fashioned from the polyester. typically in the form of polymer chip, using a two stage process. in the first stage of the process, a bottle preform is made from the polyester by injection moulding and in the second stage this bottle preform is heated to an appropriate temperature, e.g. using infra red radiation, and then blown using compressed air into a mould which is the final shape of the bottle. The blow moulding process causes biaxial orientation of the polyester to occur in selected regions of the bottle, such as the cylindrical main wall, and this endows the bottle with greater strength allowing it to resist deformation during use. A preferred blow moulding process is a stretch blow moulding process in which an inner mandrel is moved into the preform along the axis thereof before and/or simultaneously with the introduction of the compressed air so as to facilitate the stretching of the bottle preform in the axial direction.

It is well known to prepare polyester in a two stage process. In the first stage 'monomer' is produced at an elevated temperature typically in the range from 150 to 285°C by reacting a dicarboxylic acid with a glycol (direct esterification) or alternatively by reacting an alkyl ester of a dicarboxylic acid with a glycol (ester interchange or transesterification). A catalyst such as manganese acetate or zinc acetate is normally employed in the ester interchange reaction, whereas direct esterification can be carried out in the absence of a catalyst. In the second stage of polyester production the monomer molecules are condensed together (polycondensation) by heat in the presence of a catalyst. Glycol is produced during the condensation reaction and removed under reduced pressure. A wide range of polycondensation catalysts have been employed commercially such as antimony trioxide, germanium dioxide and zinc acetate.

The process which is most often used commercially to prepare PET intended for conversion into bottles and other containers involves first forming a low molecular weight oligomer roughly corresponding to the compound bis(2-hydroxyethyl) terephthalate by the reaction of ethylene glycol with either terephthalic acid or a dialkyl terephthalate ester such as dimethyl terephthalate. Typically, this oligomer is made by esterifying terephthalic acid with ethylene glycol in the molar ratio range of from 1: 1.05 to 1:2.5, typically 1:1.15 to 1: 1.3, at near atmospheric pressure and at a suitably elevated temperature, e.g. 270°C. Water is produced during the esterification reaction and is removed by distillation along with ethylene glycol which co-distils. The resulting oligomer comprises a mixture of compounds believed to include monoesters, bis(2-hydroxyethyl) terephthalate diester and low molecular weight oligomers. The mean degree of polymerisation (here referring to the number of ethylene terephthalate residues in the oligomer) of the mixture is typically from 2.5 to 10.0. This oligomer is commonly referred to as bis(2-hydroxyethyl) terephthalate or by simply using the term 'monomer', which term shall be used hereafter.

The monomer is subsequently polymerised in the melt at elevated temperature, typically 250 to 300°C, and under partial vacuum to yield an intermediate molecular weight polymer (commonly referred to as a prepolymer). This melt phase polymerisation or polycondensation step results in the generation of ethylene glycol and water which are continuously removed during the polymerisation reaction and is continued until a prepolymer having an Intrinsic Viscosity (IV) in the range of from about 0.50 to about 0.68 dl/g is formed. When the IV of the prepolymer has reached the desired value, the molten prepolymer is extruded as a lace, quench cooled and cut into pellets. These pellets are usually of amorphous polymer owing to the rapid cooling process.

The prepolymer pellets are then subjected to solid state polymerisation which involves heating the pellets, typically to a temperature of around 210 to 240°C, under partial vacuum or in an inert gas flow. The solid state polymerisation can be carried out in fluidised bed reactors, in tumbling chip reactors or in continuously operating fixed bed reactors, and is typically continued until the IV of the polymer is about 0.7 to 0.9 dl/g.

As mentioned above, the prepolymer pellets generated in the melt phase polymerisation process are amorphous, and as such tend to soften and stick together (sinter) at the kinds of temperatures which are needed to create a satisfactory polymerisation rate in the solid state. To avoid this problem, the amorphous prepolymer pellets are usually crystallised prior to solid state polymerisation by heating the pellets to a temperature which is slightly below that prevailing in the solid state polymerisation. The crystalline prepolymer softens at higher temperatures than the amorphous material and so the problem of the prepolymer pellets sticking together at the temperatures encountered in the solid state polymerisation process is avoided.

Titanium compounds, such as alkyl titanates, have been used as polyester catalysts, both for monomer formation and polycondensation. Unfortunately, however, titanium catalysts often result in the production of a polymer having a relatively high haze due to deactivation of the titanium catalyst and the precipitation of inorganic titanium compounds such as titanium dioxide. As a result, films and containers made from the polymer are often unacceptable due to the level of haze. The aforementioned deactivation of the titanium catalyst can also result in a reduction in the catalytic efficiency thereof. Furthermore, titanium catalysts often yield polymers which are yellow in appearance and thus unsuitable for making films and bottles. Yellowing of the polymer is particularly undesirable when the polymer is to be used for making bottles where a water white, transparent polymer is required.

GB-A-1421972 is directed to the use of alkyl titanates as a direct esterification catalyst in polyester, preferably polyethylene terephthalate, production.

JP-A-6170911 discloses a method of producing a polyester, particularly polyethylene terephthalate, film using a polyester polymerised with 7 to 120 ppm of titanium atoms and adding up to 150 ppm of phosphorous atoms after polymerisation and prior to melt extrusion. JP-A-6170911 discloses titanium alcoholates and organic acid salts, and the reaction products of tetraalkyl titanates and aromatic polycarboxylic acids or anhydrides thereof as suitable titanium catalysts.

We have now developed a process for producing a polyester polymer using specific titanium or zirconium catalysts which can reduce or overcome at least one of the problems mentioned above in relation to titanium catalysts.

According to the present invention there is provided a process for producing a polyester polymer using a catalyst obtainable by reacting an alkyl titanate or an alkyl zirconate, an alcohol, a 2-hydroxy carboxylic acid and a base, wherein the alcohol comprises at least two hydroxyl groups.

Examples of polyester articles made of the polyester polymer include extruded sheets, tubes and blister/display packs. However, the polyester article preferably takes the form of a film or container.

When the polyester article takes the form of a container, it is typically a bottle and is preferably a bottle which has been made from the polyester polymer by an injection blow moulding process, particularly an injection stretch blow moulding process.

The polymer produced according to the present invention may be used for preforms from which bottles can be made, particularly injection moulded bottle preforms comprising a polyester polymer produced using a catalyst obtainable by reacting an alkyl titanate or an alkyl zirconate, an alcohol having at least two hydroxyl groups, a 2-hydroxy carboxylic acid and a base.

injection blow moulded bottles are made in a two stage process. In the first stage of the process a bottle preform is produced from the polyester polymer by injection moulding and in the second stage the preform is heated to an appropriate temperature, e.g. using infra red radiation, and then blow moulded to make the final bottle product. Injection stretch blow moulded bottles are made by the same process as injection blow moulded bottles except that the preform is also axially stretched using a mandrel before and/or during the blow moulding process.

The preform takes the form of a miniature bottle, generally being a cylinder closed at one end and having a length about a third and an external diameter about a quarter of the final bottle. For example, a bottle having a capacity of 1.5 litres will typically be about 30 cm long and have an external diameter of about 8 to 12 cm. The intermediate preform for such a bottle would typically be about 10 to 15 cm long and about 3 to 4 cm in external diameter.

A suitable polyester polymer for making containers and particularly bottles is a partially aromatic polyester and particularly a polyester which is substantially derived from an aromatic diacid (or an ester thereof) and an aliphatic (including cycloaliphatic) diol.

A preferred partially aromatic polyester for making containers and particularly bottles is one which comprises at least 50 mole %, preferably at least 70 mole %, of ethylene terephthalate residues, i.e. residues derived from the reaction of terephthalic acid or an ester thereof, e.g. dimethyl terephthalate, and ethylene glycol. The polyester may also contain residues derived from ethylene isophthalate, ethylene naphthalate, ethoxyethylene terephthalate, ethoxyethylene isophthalate or ethoxyethylene naphthalate.

A particularly preferred partially aromatic polyester for making bottles is a modified polyethylene terephthalate polymer which has been substantially derived from terephthalic acid (or an ester thereof, e.g. dimethyl terephthalate) and ethylene glycol, and which has been modified by incorporating units of a chain orientation disrupting aromatic dicarboxylic acid (or an ester thereof) to replace some of the terephthalate units provided by the terephthalic acid. The chain orientation disrupting aromatic dicarboxylic acid reduces the tendency of the polymer to crystallise under the orientation produced by stretching and is, therefore, advantageously employed in polyethylene terephthalate based polyesters that are to be processed into bottles using an injection blow moulding, especially an injection stretch blow moulding, technique. The chain orientation disrupting aromatic dicarboxylic acid is one in which the two carboxyl functional groups are bound directly to aromatic, particularly benzene or naphthalene, rings and are not co-linear. This lack of co-linearity can be achieved by using diacids in which the angle between the two carboxyl functional groups is significantly different from 180° or in which the carboxyl functional groups are nearly parallel but not co-linear, as in 1.5 and 2,6 substitution patterns around a naphthalene ring system. Examples of suitable chain orientation disrupting aromatic dicarboxylic acids include isophthalic acid (benzene- 1,3-dicarboxylic acid), which is particularly useful, naphthalene-2,6-dicarboxylic acid, 2,2-diphenylpropane-4,4'-dicarboxylic acid, 2,2-diphenylmethane- 4,4'-dicarboxylic acid, biphenyl-3,4'-dicarboxylic acid and benzophenone-4,4'-dicarboxylic acid.

The amount of the chain orientation disrupting aromatic dicarboxylic acid which is incorporated in the modified polyethylene terephthalate polymer should, of course, be sufficient to reduce the tendency of the polymer to crystallise. The particular amount will depend on the particular dicarboxylic acid used, but, typically, the proportion of units derived from the chain orientation disrupting aromatic dicarboxylic acid as a percentage of the total dicarboxylic acid derived units in the polymer will be in the range of from 1.0 to 12.0 mole %, and particularly advantageous results may be attainable using proportions in the range of from 1.5 to 4.0 mole %, especially 1.8 to 3.0 mole %.

The modified polyethylene terephthalate polymer may also include a small proportion of diethylene glycol residues to replace some of the usual monoethylene glycol residues. The polymerisation process which is used to prepare polyethylene terephthalate for bottles will usually result in the incorporation of some polyethylene glycol residues in the polymer, particularly diethylene glycol residues and to a lesser extent triethylene glycol residues. In a continuous polymerisation process, the proportion of polyethylene glycol residues incorporated in the polymer will typically be of the order of 1.5 to 2.5 mole % based on the total glycol residues in the polymer. (The di- and tri-ethylene glycol residues may be formed by the linking of chains terminated by glycol residues as well as by etherification of the ethylene glycol monomer, so there is not necessarily any free di- or tri-ethylene glycol formed during the reaction.) However, if desired, additional diethylene glycol residues may be incorporated into the polymer by adding diethylene glycol as a monomer.

When the polyester article of the invention is a bottle, the polyester polymer from which it is formed will typically have an Intrinsic Viscosity (IV) in the range of from 0.70 to 0.90 (as measured on a 1% w/v solution of the polymer in o-chlorophenol at 25°C). A particularly useful range for the IV is from 0.72 to 0.85. Preferred polyester polymers for converting into bottles will also have a haze value of less than 9, particularly less than 8 and especially less than 6. By haze we mean the percentage of light which deviates by more than 2.5° on average in the forward direction as measured using a Gardner Pivotable Sphere Hazemeter on a polyester plaque 100 mm in diameter and 4 mm thick.

Polyester polymer for bottles can be made by any of the methods known to those skilled in the art for preparing bottle polymer and, in particular, by the most commonly used method which has already been generally described herein.

The polyester polymer which is used in the container of the present invention can also contain additives which do not adversely affect the polymer, such as stabilisers, processing aids, fillers, antioxidants, plasticisers and lubricants. Pigments and/or dyes can also be included to make coloured bottles, in particular to obtain green, amber and brown coloured bottles. Where the polymer does contain additives, these will generally be incorporated in the amounts that are conventional in the art.

When the polyester article of the present invention takes the form of a polyester film, the film will be a self-supporting film by which is meant a self-supporting structure capable of independent existence in the absence of a supporting base.

A polyester suitable for use in the formation of a film is preferably a synthetic linear polyester and may be obtained by condensing one or more dicarboxylic acids or their lower alkyl (up to 6 carbon atoms) diesters, e.g. terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid) with one or more glycols, particularly an aliphatic or cycloaliphatic glycol, e.g. ethylene glycol, 1,3-propanediol, 1,4-butanediol, neopentyl glycol and 1,4-cyclohexane dimethanol. A polyethylene terephthalate or polyethylene naphthalate film is preferred. A polyethylene terephthalate film is particularly preferred, especially such a film which has been biaxially oriented by sequential stretching in two mutually perpendicular directions, typically at a temperature in the range from 70 to 125°C, and preferably heat set, typically at a temperature in the range from 150 to 250°C, for example as described in GB-A-838708.

The polyester film may be unoriented, or preferably oriented, for example uniaxially oriented, or more preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics material as a flat extrudate which is subsequently stretched first in one direction and then in the other mutually perpendicular direction. Generally, it is preferred to stretch firstly in the longitudinal direction, i.e. the forward direction through the film stretching machine, and then in the transverse direction. A stretched substrate film may be, and preferably is, dimensionally stabilised by heat-setting under dimensional restraint at a temperature above the glass transition temperature thereof.

When the polyester article of the invention is a film, the polyester polymer from which it is formed will typically have an IV in the range of from 0.5 to 0.8, preferably in the range of from 0.6 to 0.65, and particularly in the range of from 0.61 to 0.63. The polyester surprisingly exhibits a low IV drop on film extrusion, preferably less than 0.04, more preferably in the range from 0.001 to 0.03, particularly 0.005 to 0.002, and especially 0.01 to 0.015.

In a particularly preferred embodiment of the invention, the polyester used in the manufacture of the film exhibits a colour "b" value (i.e. yellowness value) in the range of from -6 to +6, more preferably -3 to +3, and especially -1 to +2.

In a preferred embodiment of the invention, the polyester film is transparent, exhibiting high optical clarity and low haze, preferably having a wide angle haze, being measured according to the standard ASTM D 1003-61, of <3%, more preferably <1%, particularly <0.5%, and especially <0.2%, preferably for a 125 µm thick film. The aforementioned optical characteristics can be suitably achieved by having little or no particulate additive present in the film. The polyester film may contain relatively small quantities of filler material in order to provide handleability, for example in the range from 5 to 3000 ppm, preferably 50 to 2000 ppm, and more preferably 100 to 1000 ppm. Suitable fillers include inorganic materials such as silica, china clay, calcium carbonate, and organic materials such as silicone resin particles. Spherical monodisperse fillers are preferred.

The thickness of a polyester film according to the invention is preferably in the range from 5 to 350 µm, more preferably 15 to 250 µm, particularly 25 to 150 µm, and especially 75 to 125 µm.

A polyester film according to the invention may be coated on one or both surfaces with one or more additional coating, ink, lacquer and/or metal layers, for example to form a laminate or composite which exhibits improved properties, such as handleability, antistatic, adhesion promoting or release, compared with the component materials. Suitable coating materials include film-forming polymeric resins such as acrylic resins, copolyesters, styrene copolymers, acrylic copolymers, functionalised polyolefins, polyvinyl alcohol, cellulosic materials such as nitrocellulose, ethylcellulose and hydroxyethylcellulose. Blends or mixtures of any of the aforementioned polymeric resins may be employed.

Prior to the deposition of a coating medium onto the polyester film, the exposed surface thereof may, if desired, be subjected to a chemical or physical surface-modifying treatment to improve the bond between that surface and the subsequently applied coating layer. A preferred treatment is corona discharge. Alternatively, the surface of the polyester film may be pre-treated with an agent known in the art to have a solvent or swelling action thereon, such as a halogenated phenol dissolved in a common organic solvent e.g. a solution of p-chloro-m-cresol, 2,4-dichlorophenol, 2,4,5- or 2,4,6-trichlorophenol or 4-chlororesorcinol in acetone or methanol.

The coating medium may be applied to an already oriented polyester film surface, but application of the coating medium is preferably effected before or during the stretching operation. In particular, it is preferred that the coating medium should be applied to the polyester film surface between the two stages (longitudinal and transverse) of a biaxial stretching operation.

The polyester film or additional coating layer(s), may conveniently contain any of the additives conventionally employed in the manufacture of polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated into the film-forming (co)polyester and/or coating layer medium.

The catalyst which is used to produce the polyester polymer from which the polyester article of the present invention is made is obtainable by reacting, and preferably is the reaction product of, an alkyl titanate or an alkyl zirconate, an alcohol having at least least two hydroxyl groups, a 2-hydroxy carboxylic acid and a base. A combination of an alkyl titanate and an alkyl zirconate may be used in the preparation of the catalyst if desired.

By the terms alkyl titanate and alkyl zirconate, we are intending to include compounds having substituted alkyl groups. The term also includes condensed products which are frequently represented by the formula R¹O[M(OR¹)₂O]ₙR¹ in which M is titanium or zirconium and R¹ is an alkyl group, preferably containing from 1 to 6 carbon atoms. Preferably, n is less than 20 and more preferably is less than 10. Suitable condensed alkyl titanates and alkyl zirconates include the compounds known as polybutyl titanate, polyisopropyl titanate and polybutyl zirconate.

Preferred alkyl titanates and alkyl zirconates for preparing the catalyst have the formula M(OR)₄ in which M is titanium or zirconium and R is an alkyl group, preferably containing from 1 to 6 carbon atoms. Preferred alkyl titanates include tetramethyl titanate, tetraethyl titanate, tetrapropyl titanate, tetraisopropyl titanate, tetrabutyl titanate and tetrahexyl titanate. Tetraisopropyl titanate is particularly preferred. Preferred alkyl zirconates include tetraethyl zirconate, tetrapropyl zirconate and tetrabutyl zirconate.

The alcohol comprises at least two hydroxyl groups and more preferably is a dihydric alcohol. Suitable dihydric alcohols include 1,2-diols such as ethylene glycol and 1,2-propane diol: 1,3-diols such as 1,3-propane diol: and dihydric alcohols containing a longer chain such as diethylene glycol and polyethylene glycol. Suitable polyhydric alcohols include glycerol, trimethylol propane and pentaerythritol. Ethylene glycol and diethylene glycol are preferred alcohols. The molar ratio of alcohol to alkyl titanate or zirconate is preferably in the range of from 2:1 to 12: 1, more preferably in the range of from 4:1 to 8: 1.

Preferred 2-hydroxy carboxylic acids include lactic acid. citric acid, malic acid and tartaric acid. Citric acid is particularly preferred. The molar ratio of 2-hydroxy carboxylic acid to alkyl titanate or zirconate is preferably in the range of from 1:1 to 4:1, more preferably in the range of from 1.5:1 to 3.5:1.

The base is generally an inorganic base and suitable bases include sodium hydroxide, potassium hydroxide, ammonium hydroxide, sodium carbonate and ammonia. Generally, the amount of base used will be sufficient to fully neutralise the 2-hydroxy carboxylic acid, but this is not essential. For monobasic 2-hydroxy acids, such as lactic acid, the preferred amount of base is in the range of from 0.8 to 1.2 moles per mole of 2-hydroxy acid. In the case of citric acid (a tribasic acid), the preferred amount of base is in the range of from 1 to 3 moles per mole of 2-hydroxy acid. In general, the molar ratio of base to alkyl titanate or zirconate is in the range of from 1:1 to 12: 1, preferably in the range of from 1:1 to 4: 1.

The catalyst may be prepared by mixing the components thereof together with the removal of any bi-product at any appropriate stage. In one preferred method, the alkyl titanate or zirconate and alcohol are mixed together and the 2-hydroxy carboxylic acid and base are then added to this mixture, either sequentially with the 2-hydroxy carboxylic acid being added first or as a pre-neutralised mixture. In another preferred method, the alkyl titanate or zirconate is reacted with the 2-hydroxy carboxylic acid and the alcohol bi-product removed. The base is then added to this reaction product followed by the alcohol.

The amount of catalyst used in the production of the polyester from which the polyester article of the present invention is made will depend, inter alia, upon the titanium or zirconium content of the catalyst and also on whether the article is a film or a container. If the article is a container and particularly if it is a bottle, the amount of catalyst which is used in the preparation of the polyester polymer will usually be such as to provide from 2.5 to 100 ppm, preferably from 5 to 75 ppm, more preferably from 7.5 to 50 ppm. and especially from 7.5 to 30 ppm of titanium or zirconium atoms based on the weight of the polyester polymer which is finally produced. If the article is a film, the amount of catalyst which is used in the preparation of the polyester polymer will usually be such as to provide from 15 to 120 ppm, preferably from 15 to 100 ppm, more preferably from 20 to 30 ppm, and especially from 24 to 30 ppm of titanium or zirconium atoms based on the weight of the polyester polymer which is finally produced.

A mixture of any two or more of the titanium and zirconium catalysts described herein may be employed to produce the polyester polymer.

The titanium or zirconium catalyst may catalyse the esterification or ester interchange reactions used to produce monomer as well as the melt phase and optionally solid state polymerisation reactions which follow. Thus, the catalyst may be added before monomer formation so that it is at least catalysing the esterification or ester interchange reaction and perhaps also the polymerisation process which follows, or it may be added after monomer formation when it will serve to catalyse the polymerisation process only. Preferably, the catalyst is added before monomer formation.

In one embodiment of the present invention, the polyester from which the polyester article is made is produced by using the titanium or zirconium catalyst to catalyse monomer formation, preferably by the direct esterification route, and an additional catalyst is used to catalyse the subsequent polymerisation process. Additional catalysts include those conventionally used in the art, such as zinc acetate and antimony and germanium catalysts, e.g. antimony trioxide and germanium dioxide. The additional catalyst, suitably antimony trioxide, is generally used in an amount of from 100 to 500 ppm, preferably 150 to 350 ppm, and more preferably 225 to 275 ppm based on the weight of the final polyester produced.

A phosphorus stabilising compound may also be incorporated in the polyester. Suitable phosphorus compounds include phosphorus acids, phosphinic acids, phosphates and phosphites. Particular examples include phosphorous acid, phosphoric acid, phosphonic acid, sodium dihydrogen phosphate, tris nonylphenyl phosphite, trimethyl phosphate, triethyl phosphate, tributyl phosphate, triphenyl phosphate, diphenyl phosphite, dibutyl phosphite, dimethylphenyl phosphonate and ammonium phosphate. The phosphorus compound is preferably selected from the group consisting of phosphoric acid, phosphorous acid, and tris nonylphenyl phosphite.

The concentration of phosphorus atoms is suitably in the range from 2 to 100, preferably 2 to 60, more preferably 2 to 30, particularly 3 to 20, and especially 10 to 20 ppm based on the weight of the final polyester.

The phosphorus compound may be added prior to monomer formation, but is preferably added after monomer formation, i.e. after the direct esterification or ester interchange reaction, and prior to the polycondensation reaction.

The molar ratio of titanium or zirconium atoms to phosphorus atoms is preferably in the range of from 0.25:1 to 4: 1, more preferably 0.33: to 3: 1, particularly 0.5:1 to 2:1, and especially 0.75:1 to 1.5: 1. In an especially preferred embodiment, the molar ratio of titanium or zirconium atoms to phosphorus atoms is about 1:0.85.

In a preferred embodiment of the invention a toning material is added to the reaction mixture to improve the colour and clarity of the final polyester. A preferred toning material is a cobalt (II) salt, such as cobalt acetate and cobalt acetate tetrahydrate, which will typically be added in an amount to provide from 19 to 60 ppm, preferably from 27 to 41 ppm, and more preferably from 31 to 36 ppm of cobalt based on the weight of the final polyester. Another suitable toning material is a combination of red and blue dyes. The red dye will preferably be added in an amount of from 1 to 15 ppm, more preferably from 1 to 10 ppm, and particularly preferably from 2 to 5 ppm based on the weight of the polymer. The blue dye will preferably be added in an amount of from 1 to 20 ppm, more preferably from 1 to 15 ppm, and particularly preferably from 3 to 8 ppm based on the weight of the polymer.

The toning material is preferably added after monomer formation, i.e. after the direct esterification or ester interchange reaction, and prior to the polycondensation reaction. The toning material is, however, preferably added after the phosphorus compound.

Sodium hydroxide may also be added to the reaction mixture, preferably prior to monomer formation and more preferably at the same time as the titanium or zirconium catalyst, in order to suppress the formation of diethylene glycol. If sodium hydroxide is incorporated in the reaction mixture, the amount which is added will preferably be such as to provide no more than 40 ppm, more preferably no more than 30 ppm and particularly preferably no more that 20 ppm of sodium based on the weight of the final polyester.

The present invention is now illustrated but not limited with reference to the following examples.

### Example 1

The catalyst was prepared by dissolving citric acid monohydrate (132.5 g, 0.63 moles) in warm water (92.8 g) in a 1 litre fishbowl flask fitted with a stirrer, condenser and thermometer. To the stirred solution was slowly added tetraisopropyl titanate (72.0 g, 0.25 moles) from a dropping funnel. The mixture was heated to reflux for 1 hour to yield a hazy solution from which an isopropanol/water mixture was distilled off under vacuum. The product was cooled to below 70°C and 32% wt/wt aqueous NaOH (94.86 g, 0.76 moles) was slowly added from a dropping funnel to the stirred solution. The resultant product was filtered, mixed with ethylene glycol (125.54 g, 2.0 moles) and heated under vacuum to remove isopropanol/water to yield a slightly hazy pale yellow product (Ti content 3.85 % by weight).

Polyethylene terephthalate (PET) polymer was made by using a batch terephthalic acid based route. The esterification vessel was charged with 2250 kg of terephthalic acid, 1050 litres of ethylene glycol, 50 ppm NaOH and 1920 ppm of a solution of the titanium catalyst produced above (80 ppm Ti atoms). The mixture was heated to 265°C until all the reaction water had been distilled off. 155 ppm of phosphoric acid stabiliser was then added and the reaction mixture transferred to an autoclave, 300 ppm of cobalt acetate tetrahydrate was added, the reaction mixture was heated to 295°C and melt polymerisation under vacuum occurred. The resulting PET polymer had an Intrinsic Viscosity (IV) of 0.685 (as measured by solution viscosity on an 8% solution of the polyester in o-chlorophenol at 25°C), was glass clear and showed no signs of catalyst haze by dark field analysis.

A sample of the PET polymer prepared above was extruded into a molten web in a conventional manner from a slot die on to the polished surface of a cooled rotating drum upon which the web was quenched to below the glass transition temperature of the polyester to provide an amorphous film. The quenched film was then reheated and drawn about 3,2 times its original length in the MD, passed into a stenter oven and the sheet stretched in the TD to approximately 3.8 times its original dimensions, followed by heat setting. Final film thickness was 125 µm. The wide angle haze of the film was 0.51 % (as measured according to the standard ASTM D 1003-61).

### Example 2

### The catalyst was prepared as described in Example 1.

A polyethylene terephthalate (PET) polymer was made using a batch terephthalic acid based route. The esterification vessel was charged with 59.3 kg of terephthalic acid, 1.2 kg isophthalic acid, 26 litres ethylene glycol and a solution of the titanium catalyst produced above (to give 24 ppm of Ti atoms). The mixture was heated to 265°C until all the reaction water had been distilled off. Phosphoric acid stabiliser was then added (to give 13.2 ppm of P atoms) and the reaction mixture transferred to an autoclave. Cobalt acetate tetrahydrate toner in ethylene glycol was added at this point to give 35.9 ppm of Co atoms. The reaction mixture was then heated to 280 to 290°C and melt polymerisation under vacuum occurred. The resulting PET polymer was glass clear, showed no signs of catalyst haze by dark field analysis, had an IV of about 0.63 (as estimated using the final torque of the autoclave stirring arm at 40 revs per minute (rpm)), and was suitable for making into a film. The colour of the polymer was also measured on a Colorgard System 45 using the Hunter scale (lh, ah, bh). The following results were obtained.
lh = 47. 12; ah = 6.05: bh = 0.19

### Example 3

### The catalyst was prepared as described in Example 1.

A polyethylene terephthalate (PET) polymer was made using a batch terephthalic acid based route. The esterification vessel was charged with 59.3 kg of terephthalic acid, 1.2 kg isophthalic acid, 26 litres ethylene glycol and a solution of the titanium catalyst produced above (to give 24 ppm of Ti atoms). The mixture was heated to 265°C until all the reaction water had been distilled off. Phosphoric acid stabiliser was then added (to give 13,2 ppm of P atoms) and the reaction mixture transferred to an autoclave. The reaction mixture was then heated to 280 to 290°C and melt polymerisation under vacuum occurred. The resulting PET polymer was glass clear, showed no signs of catalyst haze by dark field analysis, had an IV of about 0.63 (as estimated using the final torque of the autoclave stirring arm at 40 revs per minute (rpm)) and was suitable for making into a film. The colour of the polymer was also measured on a Colorgard System 45 using the Hunter scale (lh, ah, bh). The following results were obtained. lh = 66.74; ah = -1.69; bh = 15.34

### Example 4

### The catalyst was prepared as described in Example 1.

A polyethylene terephthalate (PET) polymer was made using a batch terephthalic acid based route. The esterification vessel was charged with 59.3 kg of terephthalic acid, 1.2 kg isophthalic acid, 26 litres ethylene glycol and a solution of the titanium catalyst produced above (to give 7.5 ppm of Ti atoms). The mixture was heated to 265°C until all the reaction water had been distilled off. Phosphoric acid stabiliser was then added (to give 2.4 ppm of P atoms) and the reaction mixture transferred to an autoclave. The reaction mixture was then heated to 280 to 290°C and melt polymerisation under vacuum occurred. The resulting PET polymer was glass clear, showed no signs of catalyst haze by dark field analysis, had an IV of about 0.63 (as estimated using the final torque of the autoclave stirring arm at 40 revs per minute (rpm)) and was suitable for making into a film. The colour of the polymer was also measured on a Colorgard System 45 using the Hunter scale (lh, ah, bh). The following results were obtained.
lh = 67.9; ah = -0.78; bh = 18.49

### Example 5

### The catalyst was prepared as described in Example 1.

A polyethylene terephthalate (PET) polymer was made using a batch terephthalic acid based route. The esterification vessel was charged with 60.5 kg of terephthalic acid and 26 litres of ethylene glycol. The mixture was heated to 265°C until all the reaction water had been distilled off. Trisnonylphenyl phosphite stabiliser was then added (to give 13.6 ppm of P atoms) and once this was well mixed in, a solution of the titanium catalyst produced above was added (to give 30 ppm of Ti atoms). The reaction mixture was then transferred to an autoclave, heated to 280 to 290°C and melt polymerisation under vacuum occurred. The resulting PET polymer was slightly milky in appearance, had an IV of about 0.63 (as estimated using the final torque of the autoclave stirring arm at 40 revs per minute (rpm)) and was suitable for making into a film. The colour of the polymer was also measured on a Colorgard System 45 using the Hunter scale (lh, ah, bh). The following results were obtained.
lh = 66.43: ah = -2.03: bh = 20.82

### Example 6

750 g of the PET polymer prepared in Example 1 was polymerised in the solid state at 213°C under a flow of nitrogen to yield a PET polymer having an IV of around 0.82 as measured by melt viscometry. This polymer was then made into a bottle using an injection stretch blow moulding technique.

### Examples 7 to 12

### The catalyst was prepared as described in Example 1.

A series of polyethylene terephthalate (PET) polymers were made using a batch terephthalic acid based route. The esterification vessel was charged with 59.3 kg of terephthalic acid, 1,2 kg isophthalic acid, 26 litres ethylene glycol and a solution of the titanium catalyst produced above (the amount of the catalyst being different for each example). The mixture was heated to 265°C until all the reaction water had been distilled off. Phosphoric acid stabiliser was then added (the amount added being different for each example) and the reaction mixture transferred to an autoclave. For some of the examples, a toner in ethylene glycol was added at this point (the amount added being different for each example). The reaction mixture was then heated to 295°C and melt polymerisation under vacuum occurred. The resulting PET polymers were transparent, showed no signs of catalyst haze by dark field analysis and had an IV of about 0.6 as measured by melt viscometry. The colour of the various polymers was measured on a Colorgard System 45 in CIE units (L*, a*, b*) and using the Hunter scale (lh, ah, bh). Information on the amount of titanium catalyst, phosphoric acid stabiliser and toner added as well as the results are given in Tables 1 and 2.

**Table 1**

| Example No. | Ti ppm | P ppm | Toner | IV | L* | a* | b* | lh | ah | bh |
|---|---|---|---|---|---|---|---|---|---|---|
| 7 | 15 | 9.7 | none | 0.61 | 74.9 | -1.85 | 19.1 | 69.3 | -1.71 | 15.7 |
| 8 | 7.5 | 4.8 | none | 0.6 | 80.6 | -2.48 | 12.2 | 76.0 | -2.36 | 10.8 |
| 9 | 11.25 | 7.3 | none | 0.61 | 78.9 | -1.88 | 19.3 | 73.3 | -1.76 | 16.2 |

**Table 2**

| Example No | Ti ppm | P ppm | Co¹ppm | red dye ppm² | blue dye ppm² | L* | a* | b* | lh | ah | bh |
|---|---|---|---|---|---|---|---|---|---|---|---|
| 10 | 7.5 | 4.8 | 30.8 | - | - | 63.2 | 5.58 | -3.09 | 56.4 | 4.91 | -2.74 |
| 11 | 7.5 | 4.8 | - | 2 | 5 | 55.5 | 6.36 | -12.3 | 48.4 | 5.34 | -11.2 |
| 12 | 24 | 13.2 | 31.4 | - | - | 54.6 | 8.75 | -3.88 | 47.5 | 7.36 | -3.28 |

| | | | | | | | | | | | |
|---|---|---|---|---|---|---|---|---|---|---|---|
| ¹Co was added as cobalt acetate tetrabydrate in ethylene glycol. | | | | | | | | | | | |
| ²The red and blue dyes, Estofil SFBL (TM) and Estofil SRBL (TM) respectively, are available from Clariant UK Ltd. The dyes were added as a solution in ethylene glycol. | | | | | | | | | | | |

The above polymers were then polymerised in the solid state at 210°C under a flow of nitrogen to yield PET polymers having an IV of around 0.82 as measured by melt viscometry. In Examples 7, 8 and 9, samples of the PET polymers obtained after solid state polymerisation were made into plaques 100 mm in diameter and 4 mm thick and the haze values of the polymer plaques were then measured using a Gardner Pivotable Sphere Hazemeter. Haze values of 1.8, 1.6 and 2.2 were obtained for the polymers of Examples 7, 8 and 9. Finally, the PET polymers obtained after solid state polymerisation in Examples 7 to 11 were made into bottles using an injection stretch blow moulding technique. The final polymer of Example 12 was also suitable for making into a bottle.

### Comparative Example 1

The procedure of Example 1 was repeated except that 250 ppm of tetraisopropyl titanate (40 ppm Ti atoms) was used as catalyst to prepare the polyester. The wide angle haze of the resultant film was 1.35%.

## Claims

1. A process for producing a polyester polymer using a catalyst obtainable by reacting an alkyl titanate or an alkyl zirconate, an alcohol, a 2-hydroxy carboxylic acid and a base, wherein the alcohol comprises at least two hydroxyl groups.

2. A process as claimed in claim 1 wherein the alkyl titanate or alkyl zirconate has the formula M(OR)₄ in which M is titanium or zirconium and R is an alkyl group containing from 1 to 6 carbon atoms.

3. A process as claimed in claim 1 or 2 wherein the catalyst comprises the reaction product of an alkyl titanate, an alcohol, a 2-hydroxy carboxylic acid and a base.

4. A process as claimed in any one of claims 1 to 3 wherein the alkyl titanate is tetraisopropyl titanate.

5. A process as claimed in claim 1 wherein the alcohol is a dihydric alcohol.

6. A process as claimed in claim 5 wherein the dihydric alcohol is ethylene glycol.

7. A process as claimed in any one of claims 1 to 6 wherein the 2-hydroxy carboxylic acid is citric acid.

8. A process as claimed in any one of claims 1 to 7 wherein the base is an inorganic base.

9. A process as claimed in claim 8 wherein the inorganic base is sodium hydroxide.

10. A process as claimed in claim 1 wherein the catalyst is used in an amount to provide from 2.5 to 100 ppm of titanium or zirconium atoms in the polyester polymer which is finally produced based on the weight of that polymer.

11. A process as claimed in claim 10 wherein the catalyst is used in an amount to provide from 7.5 to 30 ppm of titanium or zirconium atoms in the polyester polymer which is finally produced based on the weight of that polymer.

12. A process as claimed in claim 1 wherein the catalyst is used in an amount to provide from 15 to 120 ppm of titanium or zirconium atoms in the polyester polymer which is finally produced based on the weight of that polymer.

13. A process as claimed in claim 12 wherein the catalyst is used in an amount to provide from 24 to 30 ppm of titanium or zirconium atoms in the polyester polymer which is finally produced based on the weight of that polymer.

14. A process as claimed in any one of the preceding claims wherein the polyester polymer comprises from 2 to 100 ppm by weight of phosphorus atoms.

15. A process as claimed in any one of the preceding claims wherein the polyester polymer comprises a toning material.

16. A process as claimed in claim 15 wherein the toning material is a cobalt (II) salt.

17. A process as claimed in claim 16 wherein the cobalt (II) salt is present in an amount to provide from 19 to 60 ppm of cobalt based on the weight of the polyester polymer.

18. A process as claimed in claim 17 wherein the cobalt (II) salt is present in an amount to provide from 31 to 36 ppm of cobalt based on the weight of the polyester polymer.

19. A process as claimed in claim 15 wherein the toning material is a combination of red and blue dyes.

20. A process as claimed in any one of the preceding claims 15 wherein the polyester polymer contains no more than 40 ppm by weight of sodium.

21. A process as as claimed in claim 20 wherein the polyester polymer contains no more than 30 ppm by weight of sodium.

22. A process as claimed in any one of the preceding claims wherein the polyester polymer has a colour "b" value in the range of from -6 to +6.

## Patentansprüche

1. Verfahren zur Herstellung eines Polyesterpolymers unter Verwendung eines Katalysators, welcher erhältlich ist, indem man ein Alkyl-Titanat oder ein Alkyl-Zirkonat, einen Alkohol, eine 2-Hydroxycarboxylsäure und eine Base zur Reaktion bringt, **dadurch gekennzeichnet, dass** der Alkohol mindestens zwei Hydroxylgruppen umfasst.

2. Verfahren nach dem Anspruch 1, **dadurch gekennzeichnet, dass** das Alkyl-Titanat oder Alkyl-Zirkonat die Formel M(OR) hat, wobei M Titan oder Zirkonium ist und R eine Alkylgruppe mit zwischen eins bis sechs Kohlenstoffatomen ist.

3. Verfahren nach Anspruch 1 oder 2, **dadurch gekennzeichnet, dass** der Katalysator das Reaktionsprodukt eines Alkyl-Titanats, eines Alkohols, einer 2-Hydroxycarboxylsäure und einer Base umfasst.

4. Verfahren nach einem der Ansprüche 1 bis 3, **dadurch gekennzeichnet, dass** das Alkyl-Titanat Tetraisopropyl-Titanat ist.

5. Verfahren nach dem Anspruch 1, **dadurch gekennzeichnet, dass** der Alkohol ein Dehydroalkohol ist.

6. Verfahren nach Anspruch 5, **dadurch gekennzeichnet, dass** der Dehydroalkohol Ethylen-Glukol ist.

7. Verfahren nach einem der Ansprüche 1 bis 6, **dadurch gekennzeichnet, dass** die 2-Hydroxycarboxylsäure Zitronensäure ist.

8. Verfahren nach einem der Ansprüche 1 bis 7, **dadurch gekennzeichnet, dass** die Base eine anorganische Base ist.

9. Verfahren nach Anspruch 8, **dadurch gekennzeichnet, dass** die anorganische Base Natriumhydroxid ist.

10. Verfahren nach Anspruch 1, **dadurch gekennzeichnet, dass** der Katalysator in einer Menge verwendet wird, um von 2,5 bis 100 ppm an Titan- oder Zirkonium-Atomen in dem am Ende hergestellten Polyesterpolymer bereitzustellen, basierend auf dem Gewicht dieses Polymers.

11. Verfahren nach dem Anspruch 10, **dadurch gekennzeichnet, dass** der Katalysator in einer Menge verwendet wird, um von 7,5 bis 30 ppm an Titan- oder Zirkonium-Atomen in dem Polyesterpolymer, welcher am Ende hergestellt wird, bereitzustellen, basierend auf dem Gewicht dieses Polymers.

12. Verfahren nach Anspruch 1, **dadurch gekennzeichnet, dass** der Katalysator in einer Menge verwendet wird, um von 15 bis 120 ppm an Titan- oder Zirkonium-Atomen in dem Polyesterpolymer, welches am Ende hergestellt wird, bereitzustellen, basierend auf dem Gewicht dieses Polymers.

13. Verfahren nach Anspruch 12, **dadurch gekennzeichnet, dass** der Katalysator in einer Menge verwendet wird, um von 24 bis 30 ppm an Titan- oder Zirkonium-Atomen in dem Polyesterpolymer, welches am Ende hergestellt wird, bereitzustellen, basierend auf dem Gewicht dieses Polymers.

14. Verfahren nach einem der vorhergehenden Ansprüche, **dadurch gekennzeichnet, dass** das Polyesterpolymer von 2 bis 100 ppm nach Gewicht eines Phosphoratoms umfasst.

15. Verfahren nach einem der vorhergehenden Ansprüche, **dadurch gekennzeichnet, dass** das Polyesterpolymer ein Tonungsmaterial umfasst.

16. Verfahren nach dem Anspruch 15, **dadurch gekennzeichnet, dass** das Tonungsmaterial ein Kobalt (II) Salz ist.

17. Verfahren nach dem Anspruch 16, **dadurch gekennzeichnet, dass** das Kobalt (II) Salz in einer Menge vorhanden ist, um von 19 bis 60 ppm Kobalt, basierend auf dem Gewicht des Polyesterpolymers, bereitzustellen.

18. Verfahren nach dem Anspruch 17, **dadurch gekennzeichnet, dass** das Kobalt (II) Salz in einer Menge vorhanden ist, um von 31 bis 36 ppm Kobalt, basierend auf dem Gewicht des Polyesterpolymers, bereitzustellen.

19. Verfahren nach Anspruch 15, **dadurch gekennzeichnet, dass** das Tonungsmaterial eine Kombination aus roten und blauen Farbstoffen ist.

20. Verfahren nach einem der vorhergehenden Ansprüche, **dadurch gekennzeichnet, dass** das Polyesterpolymer nicht mehr als 40 ppm nach Gewicht an Natrium enthält.

21. Verfahren nach dem Anspruch 20, **dadurch gekennzeichnet, dass** das Polyesterpolymer nicht mehr als 30 ppm nach Gewicht an Natrium enthält.

22. Verfahren nach einem der vorhergehenden Ansprüche, **dadurch gekennzeichnet, dass** das Polyesterpolymer einen Farb "b" Wert in dem Bereich von -6 bis +6 hat.

## Revendications

1. Procédé de production d'un polymère de polyester, en utilisant un catalyseur que l'on peut obtenir en faisant réagir un titanate d'alcoyle ou un zirconate d'alcoyle, un alcool, un acide 2-hydroxycarboxylique et une base, l'alcool comprenant au moins deux groupes hydroxyle.

2. Procédé suivant la revendication 1, dans lequel le titanate d'alcoyle ou le zirconate d'alcoyle a la formule M (OR)₄ dans laquelle M est le titane de zirconium et R est un groupe alcoyle ayant de 1 à 6 atomes de carbone.

3. Procédé suivant la revendication 1 ou 2, dans lequel le catalyseur comprend le produit de réaction d'un titanate d'alcoyle, d'un alcool, d'un acide 2-hydroxycarboxylique et d'une base.

4. Procédé suivant l'une quelconque des revendications 1 à 3, dans lequel le titanate d'alcoyle et le titanate de tétraisopropyle.

5. Procédé suivant la revendication 1, dans lequel l'alcool est un dialcool.

6. Procédé suivant la revendication 5, dans lequel le dialcool est l'éthylèneglycol.

7. Procédé suivant l'une quelconque des revendications 1 à 6, dans lequel l'acide 2-hydroxylcarboxylique est l'acide citrique.

8. Procédé suivant l'une quelconque des revendications 1 à 7, dans lequel la base est une base minérale.

9. Procédé suivant la revendication 8, dans lequel la base minérale est l'hydroxyde de sodium.

10. Procédé suivant la revendication 1, dans lequel on utilise le catalyseur en une quantité qui donne de 2,5 à 100 ppm d'atomes de titane ou de zirconium dans le polymère de polyester qui est produit finalement sur la base du poids de ce polymère.

11. Procédé suivant la revendication 10, dans lequel on utilise le catalyseur en une quantité qui donne de 7,5 à 30 ppm d'atomes de titane ou de zirconium dans le polymère de polyester qui est produit finalement sur la base du poids de ce polymère.

12. Procédé suivant la revendication 1, dans lequel on utilise le catalyseur en une quantité qui donne de 15 à 120 ppm d'atomes de titane ou de zirconium dans le polymère de polyester qui est produit finalement sur la base du poids de ce polymère.

13. Procédé suivant la revendication 12, dans lequel on utilise le catalyseur en une quantité qui donne de 24 à 30 ppm d'atomes de titane ou de zirconium dans le polymère de polyester qui est produit finalement sur la base du poids de ce polymère.

14. Procédé suivant l'une quelconque des revendications précédentes, dans lequel le polymère de polyester comprend de 2 à 100 ppm en poids d'atomes de phosphore.

15. Procédé suivant l'une quelconque des revendications précédentes, dans lequel le polymère de polyester comprend une matière de nuançage.

16. Procédé suivant la revendication 15, dans lequel la matière de nuançage est un sel de cobalt (II).

17. Procédé suivant la revendication 16, dans lequel le sel de cobalt (II) est présent en une quantité qui donne de 19 à 60 ppm de cobalt sur la base du poids du polymère de polyester.

18. Procédé suivant la revendication 17, dans lequel le sel de cobalt (II) est présent en une quantité qui donne de 31 à 36 ppm de cobalt sur la base du poids du polymère de polyester.

19. Procédé suivant la revendication 15, dans lequel la matière de nuancage est une combinaison de colorants rouge et bleu.

20. Procédé suivant l'une quelconque des revendications précédentes, dans lequel le polymère de polyester ne contient pas plus de 40 ppm en poids de sodium.

21. Procédé suivant la revendication 20, dans lequel le polymère de polyester ne contient pas plus de 30 ppm en poids de sodium.

22. Procédé suivant l'une quelconque des revendications précédentes, dans lequel le polymère de polyester à une valeur de couleur "b" de l'ordre de -6 à +6.
